# FASCICULE DE BREVET EUROPEEN

(11) **EP 4 270 981 B1**
(45) Date de publication et mention de la délivrance du brevet: **16.07.2025**
(21) Numéro de dépôt: 23169400.1
(22) Date de dépôt: 24.04.2023
(51) Int. Cl.: H04Q 9/00, G01D 4/00

(54) **PROCÉDÉ DE RELEVÉ DE DONNÉES QUALIMÉTRIQUES ET SYSTÈME METTANT EN OEUVRE LEDIT PROCÉDÉ**
VERFAHREN ZUR QUALOMETRISCHEN DATENGEWINNUNG UND SYSTEM ZUR DURCHFÜHRUNG DES VERFAHRENS
METHOD FOR READING QUALIMETRIC DATA AND SYSTEM FOR CARRYING OUT SAID METHOD

(30) Priorité: 28.04.2022 FR 2204028
(43) Date de publication de la demande: 01.11.2023
(73) Titulaire: Sagemcom Energy & Telecom SAS, 92270 Bois-Colombes (FR)
(72) Inventeur: TEBOULLE, Henri, 92500 Rueil Malmaison (FR)
(74) Mandataire: Cabinet Le Guen Maillet

(56) Documents cités:
- WO-A1-2012/104149
- CN-A- 105 137 231
- CN-A- 110 738 839
- FR-A1- 3 095 568
- US-A1- 2011 224 935

## Description

### DOMAINE TECHNIQUE

Au moins un mode de réalisation concerne un procédé de relève de données qualimétriques par un dispositif de qualimétrie configuré pour communiquer avec un ou plusieurs compteurs. Au moins un autre mode de réalisation concerne un système mettant en œuvre ledit procédé.

### ETAT DE LA TECHNIQUE ANTERIEURE

Il est connu des compteurs intelligents, de type compteurs électriques, compteurs d'énergie thermique ou compteurs à fluides, e.g. gaz ou eau, qui comprennent des interfaces de communication permettant à un système de gestion automatisée d'effectuer une collecte à distance de données compteur, e.g. des données de consommation. Par exemple, ces compteurs intelligents comportent une (ou des) interface(s) de communication de type CPL (acronyme de « Courant Porteur en Ligne ») et/ou de type radio. Ils transmettent alors par ces interfaces de communication les données compteur, e.g. sous la forme de trames, pour une remontée de ces données de consommation, à intervalles réguliers ou non, jusqu'à un système d'information les traitant de manière centralisée. Ces données de consommation sont utilisées par le système d'information notamment pour des opérations de facturation du client consommateur par un fournisseur de service.

Il est par ailleurs connu que, dans le cadre de ses relations avec ses clients et ses fournisseurs, un distributeur d'électricité contrôle la qualité de l'énergie électrique qu'il fournit ou qui lui est livrée. Pour contrôler cette qualité, il est nécessaire de déterminer les perturbations que peut subir le signal électrique. Les surtensions et creux de tension, le papillotement (« flicker » en anglais), les variations de fréquence réseaux, les harmoniques sont des exemples de paramètres représentatifs de telles perturbations. La norme EN 61000-4-30 classe A définit des méthodes de mesure, d'agrégation temporelle, de précision et d'évaluation à appliquer à chaque paramètre pour obtenir des données qualimétriques fiables, reproductibles et comparables. La classe A est notamment utilisée lorsque des données précises sont nécessaires, par exemple pour des applications contractuelles qui peuvent nécessiter la vérification de la conformité à des normes, la résolution de litiges, etc.

Il est connu du document CN 110 738 839 un dispositif d'acquisition de données d'environnement d'utilisation d'un compteur intelligent comportant : le compteur intelligent, un dispositif d'acquisition de données qualimétriques et un dispositif d'envoi et d'enregistrement de données. Le dispositif d'acquisition de données acquiert les données qualimétriques telles que des harmoniques et des fluctuations de tension. Le dispositif d'envoi et d'enregistrement des données récupère les données qualimétriques du dispositif d'acquisition de données. Le dispositif d'envoi et d'enregistrement des données stocke ensuite en mémoire les données qualimétriques en association avec un identifiant du dispositif d'acquisition de données.

Le dispositif PQI-D de GMC Instruments est un exemple de dispositif de qualimétrie certifié classe A permettant d'effectuer des calculs de données qualimétriques pour les parties moyennes et hautes tensions d'un réseau de distribution. Toutefois, un tel dispositif qui est onéreux n'est pas adapté pour effectuer des calculs de données qualimétriques dans la partie basse du réseau de distribution à savoir au plus près du consommateur final.

Il est souhaitable de pallier ces différents inconvénients de l'état de la technique. Il est notamment souhaitable de proposer un procédé de relève de données qualimétriques qui permette d'obtenir des données qualimétriques au plus près du consommateur final avec un surcoût limité.

### EXPOSE DE L'INVENTION

Au moins un mode de réalisation concerne un procédé de relève de données qualimétriques par un dispositif de qualimétrie configuré pour communiquer avec N compteurs, N étant un entier positif, ledit procédé comprenant pour chacun desdits N compteurs :
a) calculer, par ledit compteur, des données qualimétriques sur une période temporelle T et horodater lesdites données qualimétriques ;
b) envoyer, par le dispositif de qualimétrie, une requête de données qualimétriques audit compteur ;
c) en réponse à ladite requête, envoyer, par ledit compteur, lesdites données qualimétriques horodatées audit dispositif de qualimétrie ; et
d) à réception desdites données qualimétriques horodatées par ledit dispositif de qualimétrie, stocker en mémoire lesdites données qualimétriques horodatées en association avec un identifiant dudit compteur ayant envoyé lesdites données qualimétriques horodatées.

Avantageusement, le procédé décrit permet de connaître compteur par compteur la qualité, e.g. la qualité de l'énergie électrique, au point de livraison.

Dans un mode de réalisation, envoyer, par ledit compteur, lesdites données qualimétriques horodatées audit dispositif de qualimétrie comprend envoyer lesdites données qualimétriques horodatées en y ajoutant une signature et à réception desdites données qualimétriques horodatées par ledit dispositif de qualimétrie, stocker en mémoire lesdites données qualimétriques en association avec un identifiant dudit compteur ayant envoyé lesdites données qualimétriques horodatées comprend :
- authentifier lesdites données qualimétriques horodatées à partir de ladite signature reçue et d'une clé publique de signature associée audit compteur ; et
- stocker en mémoire lesdites données qualimétriques en association avec un identifiant dudit compteur ayant envoyé lesdites données qualimétriques horodatées en cas d'authentification réussie.

Dans un mode de réalisation, ledit compteur est un compteur électrique et lesdites données qualimétriques comprennent une pluralité d'harmoniques de tension, une pluralité d'harmoniques de courant et un papillotement courte durée.

Dans un mode de réalisation, lesdites étapes a) à d) étant répétées M fois, M étant un entier positif, ledit procédé comprend calculer un papillotement longue durée à partir desdits M papillotements courte durée reçus et stocker ledit papillotement longue durée avec lesdites données qualimétriques horodatées reçues.

Dans un mode de réalisation, ledit compteur est un compteur d'eau et lesdites données qualimétriques comprennent une pression aval moyennée, une différence moyennée entre une pression amont et une pression aval, un débit d'eau moyenné et une température d'eau moyennée.

Dans un mode de réalisation, ladite requête comprend en outre une heure UTC et une heure de prochain réveil dudit compteur.

Dans un mode de réalisation, ledit dispositif de qualimétrie communique avec chacun desdits N compteurs par trames WM-Bus.

Au moins un mode de réalisation concerne un système comprenant N compteurs, N étant un entier positif, et un dispositif de qualimétrie configuré pour communiquer avec lesdits N compteurs, chacun desdits N compteurs et ledit dispositif de qualimétrie comprenant de la circuiterie électronique configurée pour :
a) calculer, par ledit compteur, des données qualimétriques sur une période temporelle T et horodater lesdites données qualimétriques ;
b) envoyer, par le dispositif de qualimétrie, une requête de données qualimétrique audit compteur ;
c) en réponse à ladite requête, envoyer, par ledit compteur, lesdites données qualimétriques horodatées audit dispositif de qualimétrie,
d) à réception desdites données qualimétriques horodatées par ledit dispositif de qualimétrie, stocker en mémoire lesdites données qualimétriques horodatées en association avec un identifiant dudit compteur ayant envoyé lesdites données qualimétriques horodatées.

Le système est configuré pour mettre en œuvre le procédé selon l'un des modes de réalisation décrits précédemment.

Au moins un mode de réalisation concerne un procédé de relève de données qualimétriques par un dispositif de qualimétrie configuré pour communiquer avec N compteurs, N étant un entier positif, ledit procédé comprenant les étapes suivantes mises en œuvre par ledit dispositif de qualimétrie :
a) envoyer une requête de données qualimétriques à au moins un compteur parmi lesdits N compteurs ;
b) recevoir dudit compteur des données qualimétriques horodatées ; et
c) stocker en mémoire lesdites données qualimétriques horodatées en association avec un identifiant dudit compteur ayant envoyé lesdites données qualimétriques horodatées.

Au moins un mode de réalisation concerne un procédé de relève de données qualimétriques par un dispositif de qualimétrie configuré pour communiquer avec N compteurs, N étant un entier positif, ledit procédé comprenant les étapes suivantes mises en œuvre par chacun desdits N compteurs :
a) calculer, par ledit compteur, des données qualimétriques sur une période temporelle T et horodater lesdites données qualimétriques ;
b) recevoir une requête de données qualimétrique en provenance dudit dispositif de qualimétrie ; et
c) envoyer lesdites données qualimétriques horodatées audit dispositif de qualimétrie.

Au moins un mode de réalisation concerne un dispositif de qualimétrie configuré pour communiquer avec N compteurs, N étant un entier positif, ledit dispositif de qualimétrie comprenant de la circuiterie électronique configurée pour :
a) envoyer une requête de données qualimétriques à au moins un compteur parmi lesdits N compteurs ;
b) recevoir dudit compteur des données qualimétriques horodatées ; et
c) stocker en mémoire lesdites données qualimétriques horodatées en association avec un identifiant dudit compteur ayant envoyé lesdites données qualimétriques horodatées.

Au moins un mode de réalisation concerne un compteur configuré pour communiquer avec un dispositif de qualimétrie, ledit compteur comprenant de la circuiterie électronique configurée pour :
a) calculer des données qualimétriques sur une période temporelle T et horodater lesdites données qualimétriques ;
b) recevoir une requête de données qualimétrique en provenance dudit dispositif de qualimétrie ; et
c) envoyer lesdites données qualimétriques horodatées audit dispositif de qualimétrie.

Au moins un mode de réalisation concerne un produit programme d'ordinateur comprenant des instructions pour mettre en œuvre le procédé de relève de données qualimétriques selon l'un des modes de réalisation décrits précédemment, lorsque ledit programme est exécuté par au moins un processeur.

Au moins un mode de réalisation concerne un support de stockage stockant un programme d'ordinateur comprenant des instructions pour mettre en œuvre le procédé de relève de données qualimétriques selon l'un des modes de réalisation décrits précédemment lorsque ledit programme est exécuté par au moins un processeur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un système de relève de compteurs dans lequel les différents modes de réalisation décrits peuvent être implémentés ;
[Fig. 2] illustre schématiquement un procédé de relève de données qualimétriques selon un mode particulier de réalisation ;
[Fig. 3] illustre en détail le calcul d'une signature utilisée pour authentifier un compteur selon un mode particulier de réalisation ;
[Fig. 4] illustre un procédé d'authentification d'un compteur par un dispositif de qualimétrie selon un mode particulier de réalisation ;
[Fig. 5] illustre schématiquement un exemple d'architecture matérielle d'un dispositif de qualimétrie selon un mode particulier de réalisation ; et,
[Fig. 6] illustre schématiquement un exemple d'architecture matérielle d'un compteur selon un mode particulier de réalisation.

### EXPOSE DETAILLE DE MODES DE REALISATION

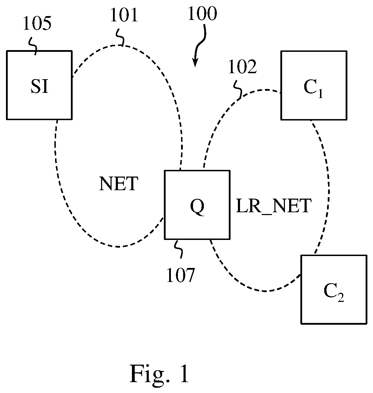

La Fig. 1 illustre schématiquement un système de relève de compteurs 100 dans lequel les différents modes de réalisation décrits ci-après peuvent être implémentés. Le système de relève de compteurs 100 est configuré pour réaliser une relève de données compteur notamment des données de consommation auprès de N compteurs intelligents Cᵢ (« Smart Meters » en anglais) avec N un entier positif et i un indice identifiant un compteur particulier, e.g. i ∈[1 ; N]. Sur la Fig.1, N=2. Les compteurs intelligents C₁ et C₂ sont par exemple des compteurs électriques, des compteurs de gaz, des compteurs d'énergie thermique ou des compteurs d'eau ou de tout autre type fluide, configurés pour mesurer une consommation grâce à un logiciel de métrologie. Ces compteurs intelligents C₁ et C₂ ont la capacité de communiquer avec un système d'information SI (« Information System » en anglais) 105 soit par transmission radio et/ou CPL ou en cellulaire (2G, 3G, 4G ou 5G) dans le cas de compteurs électriques, soit en LoRa ou NB-IoT dans le cas de compteurs à fluides ou compteurs d'énergie thermique. Ils peuvent communiquer avec le système d'information SI (« Information System » en anglais) 105 soit directement soit par l'intermédiaire de concentrateurs de données non représentés sur la Fig. 1. Le rôle du système d'information SI 105 est notamment de surveiller les opérations de mesure effectuées par les compteurs intelligents C₁ et C₂.

Dans le système de relève de compteurs 100, le système d'information SI 105 communique également avec au moins un dispositif de qualimétrie Q 107 par le biais d'un réseau de communication NET 101, ledit dispositif de qualimétrie Q 107 étant alimenté en électricité par un réseau de distribution électrique ou par batterie. Notamment, le système d'information SI 105 remet régulièrement à l'heure de temps universel coordonné (plus connu sous la terminologie UTC) le dispositif de qualimétrie Q 107 et récupère auprès du dispositif de qualimétrie Q 107 des données qualimétriques associées à un compteur particulier parmi les N compteurs. Par exemple, le réseau de communication NET 101 est l'Internet. Dans d'autres modes de réalisation, le réseau de communication NET 101 est un réseau de communication sans-fil, par exemple de type GPRS (« General Packet Radio Service » en anglais), UMTS (« Universal Mobile Telecommunication System » en anglais), LTE (« Long-Term Evolution » en anglais), NB-IoT (« Narrowband Internet of Things »), 2G, 3G, 4G ou 5G ou LoRa (acronyme anglais de « *Long Range* »).

Le dispositif de qualimétrie Q 107 communique également avec chaque compteur intelligent C₁ et C₂ par le biais d'un réseau de communication LR_NET 102. Notamment, le dispositif de qualimétrie Q 107 récupère auprès de chaque compteur intelligent auquel il est connecté des données qualimétriques associées à ce compteur. Le réseau de communication LR_NET 102 est un réseau de communication sans-fil, par exemple basé sur le standard de communication WM-Bus (NF EN 13757-4, « Communication systems for meters and remote reading of meters - Part 4: Wireless meter readout (Radio meter reading for operation in SRD bands*)* » en terminologie anglo-saxonne). Toutefois, dans des variantes de réalisation, le réseau de communication LR_NET 102 est basé sur une autre technologie de communication, telle qu'un autre standard de communication, comme par exemple BLE (acronyme anglais de « Bluetooth Low Energy ») ou ZigBee.

Sur la Fig.1, un seul dispositif de qualimétrie Q 107 est représenté. Toutefois, dans un autre mode de réalisation, le système d'information SI communique avec une pluralité de dispositifs de qualimétrie par le biais du réseau de communication NET 101, chaque dispositif de qualimétrie étant lui-même en communication avec un ou plusieurs compteurs intelligents. Par exemple, un dispositif de qualimétrie donné est en charge de récupérer des données qualimétriques associées aux compteurs intelligents d'un immeuble, d'un lotissement, d'un quartier ou même d'une ville.

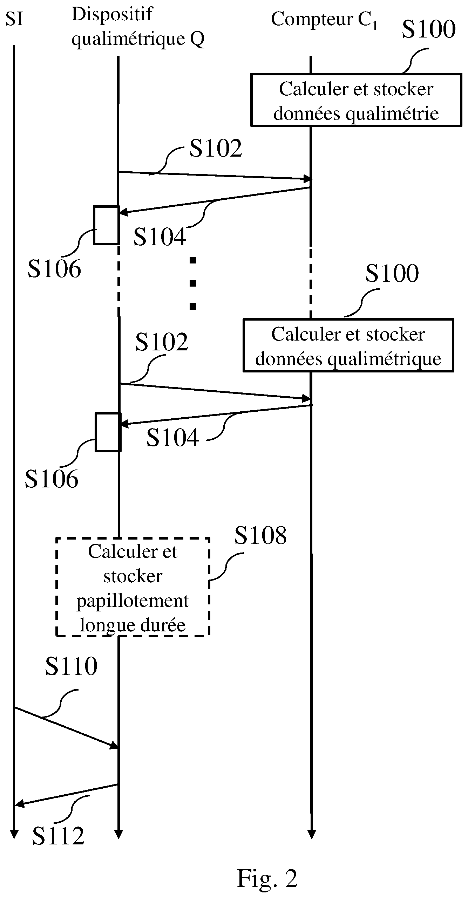

La Fig.2 illustre schématiquement un procédé de relève de données qualimétriques selon un mode particulier de réalisation. Sur la Fig. 2, un seul compteur C1 est représenté pour faciliter la description du procédé. Toutefois le procédé s'applique de manière similaire dans le cas où le dispositif de qualimétrie Q communique avec N compteurs. Le dispositif de qualimétrie Q connaît chaque compteur par son numéro de série qui lui est fourni par le SI.

Lors d'une étape S100, le compteur C1 calcule des données qualimétriques sur une période temporelle T et les horodate avec une heure déterminée selon l'heure UTC du compteur. Les données qualimétriques ainsi calculées et horodatées sont stockées par le compteur C1 en mémoire. Dans le cas où C1 est un compteur électrique, le compteur est régulièrement mis à l'heure UTC par le système d'information SI et les données qualimétriques sont par exemple calculées en tenant compte de la norme EN 61000-4-30 Classe A. Un exemple de données qualimétriques calculées sur la période temporelle T est illustré dans le tableau 1 ci-dessous pour un signal électrique triphasé :

**Tableau 1 - cas d'un compteur électrique**

| | |
|---|---|
| Harmoniques de tension de la phase 1 | U1 Fondamental |
| | U1 Harmonique 2 |
| | ... |
| | U1 Harmonique 50 |
| Harmoniques de tension de la phase 2 | U2 Fondamental |
| | U2 Harmonique 2 |
| | ... |
| | U2 Harmonique 50 |
| Harmoniques de tension de la phase 3 | U3 Fondamental |
| | U3 Harmonique 2 |
| | ... |
| | U3 Harmonique 50 |
| Harmoniques de courant de la phase 1 | I1 Fondamental |
| | I1 Harmonique 2 |
| | ... |
| | I1 Harmonique 50 |
| Harmoniques de courant de la phase 2 | I2 Fondamental |
| | I2 Harmonique 2 |
| | ... |
| | I2 Harmonique 50 |
| Harmoniques de courant de la phase 3 | I3 Fondamental |
| | I3 Harmonique 2 |
| | ... |
| | I3 Harmonique 50 |
| Papillotement courte durée pour chacune des 3 phases | Papillotement Pst (phase 1) |
| | Papillotement Pst (phase 2) |
| | Papillotement Pst (phase 3) |
| Horodate | Heure UTC des données |

Dans cet exemple, sur un intervalle de temps T, e.g. T=10 minutes, le compteur C1 calcule, pour chaque phase, 50 harmoniques de tension et 50 harmoniques de courant. Bien entendu, le procédé ne se limite pas au cas de 50 harmoniques. Ainsi plus de 50 ou moins de 50 harmoniques peuvent être calculées. Pour chaque phase, un papillotement courte durée, noté Pst, est également calculé. Ces données sont horodatées avec l'heure UTC correspondant au début ou à la fin de l'intervalle de calcul. Le mode de réalisation décrit pour un signal électrique triphasé s'applique de manière similaire à un signal électrique monophasé. Dans ce cas, les données (harmoniques de tension et de courant ainsi que papillotement courte durée) sont calculées pour une seule phase.

Les calculs des données mentionnées dans le tableau ci-dessus sont effectués de la manière décrite dans la norme EN 61000-4-30 Classe A.

Ainsi, dans un exemple particulier de réalisation, le compteur C1 effectue une FFT (acronyme anglais de « Fast Fourier Transform ») sur le signal électrique sur une période de temps Δt donnée, e.g. Δt =200 ms ce qui correspond à 10 périodes de 20 ms en 50 Hz (12 périodes de 20 ms en 60 Hz), afin de calculer les 50 harmoniques de tension et de courant, et le papillotement courte durée sur cette période Δt. Puis, le compteur C1 agrège, pour chaque paramètre du tableau, sur un intervalle de 150 périodes (180 périodes en 60 Hz) les résultats calculés précédemment sur 15 périodes Δt (18 périodes en 60 Hz). Les agrégations sont calculées en faisant des moyennes quadratiques, i.e. en calculant la racine carrée de la moyenne arithmétique du carré des valeurs d'entrée. Le compteur C1 refait une moyenne quadratique sur 10 minutes pour chaque paramètre du tableau. Les résultats de ces calculs sont connus dans la littérature sous la terminologie « valeurs 10 minutes ». Le compteur C1 horodate ces données qualimétriques calculées avec, par exemple, l'heure de début ou l'heure de fin de l'intervalle de temps de 10 minutes.

L'exemple décrit pour un intervalle de temps de 10 minutes s'applique de manière similaire à d'autres valeurs d'intervalle de temps T.

Dans le cas où le compteur C1 est un compteur d'eau, un exemple de données qualimétriques calculées sur la période temporelle T est illustré dans le tableau 2 ci-dessous :

**Tableau 2 - cas d'un compteur d'eau**

| | |
|---|---|
| Pression aval moyennée | P |
| Différence moyennée entre pression amont et pression aval | ΔP |
| Débit moyenné | D |
| Température moyennée de l'eau froide | Tp |
| Horodate | Heure UTC des données |

Dans cet exemple, sur un intervalle de temps T, e.g. T=24h, le compteur C1 calcule une pression aval moyennée, un débit moyenné, une température moyennée de l'eau froide et une différence moyennée entre une pression amont et une pression aval. Le moyennage correspond par exemple à une moyenne quadratique de mesures effectuées toutes les nb minutes, e.g. nb =10 minutes, pendant l'intervalle de temps T.

Lors d'une étape S102, le dispositif de qualimétrie Q envoie une requête au compteur C1 pour lui demander ses données qualimétriques calculées sur l'intervalle de temps T écoulé. Cette requête se présente par exemple sous la forme d'une trame WM-Bus montante. Dans un exemple de réalisation, les données utiles de la trame (« payload » en anglais) comprennent, dans le cas d'un compteur d'eau, un octet de requête qui indique précisément quelle est la requête en question à savoir une requête demandant des données qualimétriques, 6 octets de mise à l'heure UTC et 6 octets indiquant l'heure du prochain réveil. Dans le cas d'un compteur électrique, les données utiles de la trame comprennent un octet de requête. Dans le cas particulier des compteurs à fluide et des compteurs à énergie thermique qui fonctionnent généralement sur batterie contrairement aux compteurs électriques qui sont alimentés par le réseau électrique, la trame de requête comprend également une nouvelle heure UTC et une heure de prochain réveil pour une prochaine relève de données qualimétriques. En effet, ces compteurs qui ne sont pas alimentés en permanence contrairement aux compteurs électriques se rendorment lorsqu'ils sont inactifs, d'où la nécessité de les réveiller.

En réponse à ladite requête, le compteur C1 envoie, e.g. dans une trame WM-Bus descendante, lors d'une étape S104, les données qualimétriques horodatées au dispositif de qualimétrie Q. Ainsi, dans le cas d'un signal électrique triphasé, les données utiles de la trame comprennent les données mentionnées dans le tableau 1 ci-dessus. Dans le cas d'un compteur d'eau, les données utiles de la trame comprennent les données mentionnées dans le tableau 2 ci-dessus.

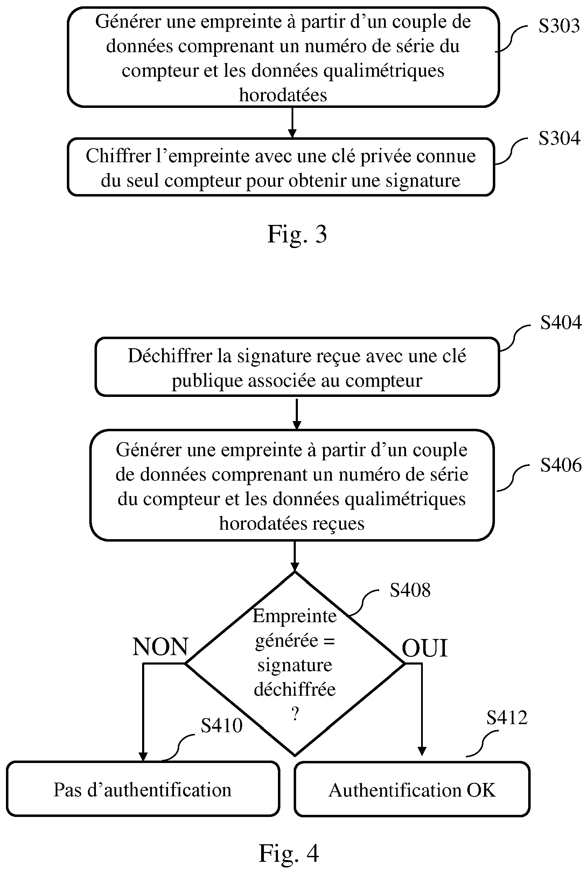

Dans un mode particulier de réalisation, le compteur C1 y adjoint une signature HASH' afin que le dispositif de qualimétrie puisse authentifier les données reçues. La signature HASH' est par exemple calculée, comme illustré par la Fig.3, en utilisant une fonction de hachage qui est appliquée sur le couple formé du numéro de série du compteur C1 et des données qualimétriques horodatées à transmettre.

Lors d'une étape S106, le dispositif de qualimétrie Q reçoit les données qualimétriques horodatées et les stocke à son tour en mémoire en association avec un identifiant du compteur les ayant envoyées, e.g. en association avec son numéro de série. Le dispositif de qualimétrie authentifie les données reçues avant de les stocker. A cet effet, le dispositif de qualimétrie connaît, pour chaque compteur, sa clé publique de signature. Dès lors, le dispositif de qualimétrie Q peut authentifier les données qualimétriques horodatées reçues à partir de la clé publique associée au compteur qui est censé avoir envoyé lesdites données qualimétriques. L'authentification est plus précisément illustrée par la Fig. 4. C'est uniquement en cas d'authentification réussie que le dispositif de qualimétrie Q stocke en mémoire les données qualimétriques horodatées reçues en association avec un identifiant du compteur les ayant envoyées.

Comme illustré sur la Fig. 2, les étapes S100 à S106 sont répétées à intervalle de temps régulier T, e.g. toutes les 10 minutes ou toutes les 24h. Plus précisément, le compteur C1 effectue les calculs de données qualimétriques du tableau 1 (respectivement du tableau 2) pour chaque intervalle de temps T et le dispositif de qualimétrie Q envoie, au début de chaque nouvel intervalle de temps T, une trame de requête de données qualimétriques. En réponse, le compteur C1 envoie les données qualimétriques calculées sur l'intervalle de temps T écoulé. Avantageusement, le dispositif de qualimétrie Q attend, e.g. 5 secondes, après le début d'un nouvel intervalle de temps T pour envoyer sa trame de requête de manière à laisser le temps au compteur de finaliser les calculs des données qualimétriques.

Les données envoyées par le compteur C1 sont par exemple mémorisées sur une fenêtre temporelle glissante, e.g. sur une semaine, par le dispositif de qualimétrie Q.

Lors d'une étape optionnelle S108, applicable uniquement dans le cas où le compteur C1 est un compteur électrique, le dispositif de qualimétrie Q calcule toutes les M (M étant un entier positif) réceptions de données qualimétriques horodatées en provenance du compteur C1, e.g. M=12, un papillotement longue durée. Le papillotement longue durée noté Plt est calculé à partir des M données de papillotement courte durée reçues en utilisant, par exemple, la formule mathématique définie dans la section 3.2 de la norme EN 61000-4-15. Dans le cas où T=10 minutes et M=12, ce calcul s'effectue donc toutes les 2h. Cette donnée est également stockée en mémoire par le dispositif de qualimétrie Q en association avec les autres données qualimétriques mémorisées pour le compteur C1, i.e. les harmoniques de tension et de courant, les papillotements courte durée.

Dans le cas où le dispositif qualimétrie Q collecte les données qualimétriques auprès de N compteurs, les étapes S100 à S106 sont répétées avec chaque compteur. Plus précisément, chaque compteur Cᵢ calcule des données qualimétriques, les horodate et les stocke en mémoire, le dispositif de qualimétrie Q récupère des données qualimétriques auprès de chacun des N compteurs. A cet effet, des étapes S102 à S106 (éventuellement répétées à intervalle de temps régulier T) sont appliquées avec chacun des N compteurs. Optionnellement, dans le cas de compteurs électriques, le dispositif de qualimétrie Q calcule, pour chaque compteur Ci, un papillotement longue durée toutes les M réceptions de données qualimétriques horodatées provenant du compteur Ci.

À tout moment, par exemple lors d'une étape S110, le système d'information SI peut envoyer une requête demandant au dispositif de qualimétrie les données qualimétriques d'un compteur particulier Ci qu'il identifie par exemple par son numéro de série. Les données qualimétriques stockées en mémoire par le dispositif de qualimétrie en association avec un identifiant du compteur Ci sont alors transmises, par le dispositif de qualimétrie, au système d'information SI lors d'une étape S112. Dans une variante de réalisation, le dispositif de qualimétrie associe aux données qualimétriques transmises une signature afin que le système d'information SI puisse l'authentifier. La signature est, par exemple, calculée comme illustré par la Fig.3, les seules différences étant que les calculs sont effectués par le dispositif de qualimétrie et non par le compteur et que la fonction de hachage est appliquée sur le couple formé du numéro de série du dispositif de qualimétrie et des données qualimétriques du compteur Ci à transmettre.

Le système d'information SI lorsqu'il reçoit les données qualimétriques transmises par le dispositif de qualimétrie peut ainsi les authentifier, i.e. vérifier que les données proviennent bien du dispositif de qualimétrie duquel elles sont censées provenir. A cet effet, le système d'information SI est configuré pour mettre en œuvre les étapes décrites en lien avec la Fig.4, les seules différences étant que les calculs sont effectués par le système d'information SI et non par le dispositif de qualimétrie et que l'empreinte HASH" est générée à partir du couple formé du numéro de série du dispositif de qualimétrie connu du SI et des données qualimétriques du compteur Ci.

La Fig. 3 illustre en détail le calcul de la signature HASH' utilisée pour authentifier un compteur selon un mode particulier de réalisation.

Lors d'une étape S303, le compteur C1 génère une empreinte notée HASH à partir d'un couple de données comprenant le numéro de série du compteur et les données qualimétriques horodatées, e.g. celles mentionnées dans le tableau 1 ou 2. A cet effet, une fonction de hachage est utilisée, e.g. une fonction de la famille SHA-2 ou SHA-3. On nomme fonction de hachage H(.), de l'anglais « hash function » une fonction particulière qui, à partir d'une donnée fournie en entrée, calcule une empreinte numérique servant à identifier rapidement la donnée initiale. Autrement dit à un couple donné correspond une empreinte unique, i.e. le résultat de la fonction de hachage. Dès lors, pour deux couples différents T1 et T2, le compteur génère deux empreintes S1=H(T1) et S2=H(T2) où S1 et S2 sont différentes.

Dans un mode de réalisation, la fonction H(.) est une fonction de la famille SHA-2 ou SHA-3, e.g. SHA-224, SHA-256, SHA-384 ou SHA-512. Dans le cas où la fonction H(.) est de type SHA-256, l'empreinte obtenue HASH comprend 256 bits. Dans le cas où la fonction H est de type SHA-512, l'empreinte obtenue HASH comprend 512 bits. D'autres fonctions peuvent être utilisées, e.g. une fonction MD4, une fonction MD5, une fonction SHA-1, toutes bien connues dans le domaine de la cryptographie, ces exemples n'étant pas limitatifs.

Dans une variante de réalisation, une étape optionnelle de bourrage (« padding » en anglais) est appliquée sur le couple de données afin d'obtenir un nombre entier d'octets avant d'appliquer la fonction de hachage H(.).

Lors d'une étape S304, le compteur C1 chiffre l'empreinte générée avec une clé privée connue du seul compteur C1. L'empreinte chiffrée est une signature et est notée HASH'. Cette clé privée a été préalablement générée par le compteur à partir de son numéro de série. Dans un mode particulier de réalisation, la clé privée est générée en appliquant un opérateur « OU exclusif » entre une valeur aléatoire de P bits propre au compteur et H(numéro de série), e.g. P=256 et H() est la fonction SHA-256 pour obtenir une clé privée de 256 bits. A cette clé privée, est associée une clé publique connue notamment du système d'information SI. Le chiffrement est un chiffrement asymétrique, e.g. à courbes elliptiques ou RSA. Le chiffrement asymétrique est une technique qui utilise deux clefs de chiffrement : une clé publique et une clé privée. La clé publique est partagée sans restriction alors que la clé privée n'est connue que du seul compteur l'ayant générée. La clé publique associée à la clé privée d'un compteur est notamment connue du dispositif de qualimétrie Q. Ainsi, le compteur C1 utilise sa clé privée pour chiffrer l'empreinte HASH afin d'obtenir une signature HASH' que le destinataire, en l'occurrence le dispositif de qualimétrie Q, peut déchiffrer avec la clé publique du compteur C1.

La Fig.4 illustre le procédé d'authentification d'un compteur par le dispositif de qualimétrie Q selon un mode de réalisation particulier.

Lors d'une étape S404, le dispositif de qualimétrie Q déchiffre ladite signature HASH' reçue avec une clé publique associée au compteur identifié par son numéro de série. En effet, le dispositif de qualimétrie Q dispose de la clé publique de signature du compteur C1 dont il connaît le numéro de série. Cette clé publique est utilisée pour déchiffrer la signature reçue HASH' et ainsi obtenir une empreinte.

Lors d'une étape S406, le dispositif qualimétrique Q génère une empreinte HASH" à partir du couple de données comprenant le numéro de série du compteur qu'il connaît et les données qualimétriques horodatées reçues. Autrement dit, le dispositif qualimétrique Q effectue la même opération que le compteur C1 à l'étape S303 avec les données qu'il a à sa disposition, i.e. numéro de série du compteur et les données qualimétriques horodatées reçues. Notamment, le dispositif de qualimétrie Q utilise, à l'étape S406, la même fonction de HASH que celle utilisée à l'étape S303 par le compteur.

Lors d'une étape S408, le dispositif de qualimétrie Q compare l'empreinte HASH" générée à l'étape S406 avec l'empreinte résultat du déchiffrement à l'étape S404 de la signature HASH'. En cas d'égalité, le dispositif de qualimétrie Q stocke les données qualimétriques reçues. En effet, en cas d'égalité, le dispositif de qualimétrie Q est certain que les données qualimétriques présentes dans la charge utile de la trame proviennent bien du bon compteur, i.e. du compteur censé avoir envoyé lesdites données. En cas d'inégalité, les données qualimétriques reçues ne sont pas stockées en mémoire et un message d'erreur peut le cas échéant être envoyé au SI.

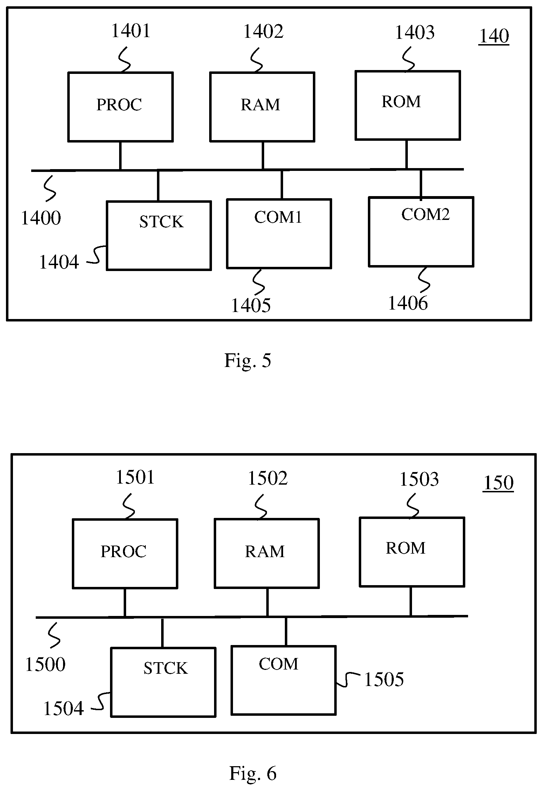

La Fig. 5 illustre schématiquement un exemple d'architecture matérielle d'un dispositif de qualimétrie 140 selon un mode particulier de réalisation. Selon l'exemple d'architecture matérielle représenté à la Fig. 5, le dispositif de qualimétrie 140 comprend alors, reliés par un bus de communication 1400 : un processeur ou CPU (« Central Processing Unit » en anglais) 1401 ; une mémoire vive RAM (« Random Access Memory » en anglais) 1402 ; une mémoire morte ROM (« Read Only Memory » en anglais) 1403 ; une unité de stockage 1404 telle qu'un disque dur ou telle qu'un lecteur de support de stockage, e.g. un lecteur de cartes SD (« Secure Digital » en anglais); au moins une première interface de communication 1405 permettant au dispositif de qualimétrie 140 d'envoyer des informations à l'entité de gestion SI et le cas échéant d'en recevoir et une seconde interface de communication 1406 permettant au dispositif de qualimétrie 140 d'envoyer ou de recevoir des informations des compteurs.

Par exemple, la première interface de communication 1405 est conforme au standard LoRa, NB-IoT, GPRS, UMTS, LTE, 2G, 3G, 4G ou 5G. La seconde interface est par exemple conforme au standard WM-Bus, ZigBee ou BLE.

Le processeur 1401 est capable d'exécuter des instructions chargées dans la RAM 1402 à partir de la ROM 1403, d'une mémoire externe (non représentée), d'un support de stockage (tel qu'une carte SD), ou d'un réseau de communication. Lorsque le dispositif de qualimétrie 140 est mis sous tension, le processeur 1401 est capable de lire de la RAM 1402 des instructions et de les exécuter. Ces instructions forment un programme d'ordinateur causant la mise en œuvre, par le processeur 1401, de tout ou partie des procédés décrits en relation avec les Figs. 2 à 4.

Les procédés décrits en relation avec les Figs. 2 à 4 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais). En général, le dispositif de qualimétrie 140 comprend de la circuiterie électronique configurée pour mettre en œuvre les procédés décrits en relation avec les Figs. 2 à 4.

La Fig. 6 illustre schématiquement un exemple d'architecture matérielle d'un compteur 150 selon un mode particulier de réalisation. Selon l'exemple d'architecture matérielle représenté à la Fig. 6, le compteur 150 comprend alors, reliés par un bus de communication 1500 : un processeur ou CPU (« Central Processing Unit » en anglais) 1501 ; une mémoire vive RAM (« Random Access Memory » en anglais) 1502 ; une mémoire morte ROM (« Read Only Memory » en anglais) 1503 ; une unité de stockage 1504 telle qu'un disque dur ou telle qu'un lecteur de support de stockage, e.g. un lecteur de cartes SD (« Secure Digital » en anglais); au moins une interface de communication 1505 permettant au compteur 150 d'envoyer ou de recevoir des informations du dispositif de qualimétrie 140. Par exemple, l'interface de communication 1505 est conforme au standard WM-Bus, ZigBee ou BLE. Le compteur 150 comprend généralement une autre interface de communication non représentée sur la Fig. 6 lui permettant de communiquer avec le SI soit directement (en cellulaire 2G, 3G, 4G ou 5G) soit au travers d'un concentrateur de données (typiquement en CPL ou en mode hybride, i.e. par CPL et radio), par exemple pour la relève de données de consommation.

Le processeur 1501 est capable d'exécuter des instructions chargées dans la RAM 1502 à partir de la ROM 1503, d'une mémoire externe (non représentée), d'un support de stockage (tel qu'une carte SD), ou d'un réseau de communication. Lorsque le compteur 150 est mis sous tension, le processeur 1501 est capable de lire de la RAM 1502 des instructions et de les exécuter. Ces instructions forment un programme d'ordinateur causant la mise en œuvre, par le processeur 1501, de tout ou partie des procédés décrits en relation avec les Figs. 2 à 4.

Les procédés décrits en relation avec les Figs. 2 à 4 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais). D'une manière générale, le compteur 150 comprend de la circuiterie électronique configurée pour mettre en œuvre les procédés décrits en relation avec les Figs. 2 à 4.

## Revendications

1. Un procédé de relève de données qualimétriques par un dispositif de qualimétrie (Q) configuré pour communiquer avec N compteurs, N étant un entier positif, ledit procédé comprenant pour chacun desdits N compteurs (C1, C2) :
a) calculer (S100), par ledit compteur, des données qualimétriques sur une période temporelle T et horodater lesdites données qualimétriques ;
b) recevoir (S102), par ledit compteur, une requête de données qualimétriques en provenance du dispositif de qualimétrie ;
c) en réponse à ladite requête, envoyer (S104), par ledit compteur, lesdites données qualimétriques horodatées audit dispositif de qualimétrie en y ajoutant une signature ;
et ledit procédé comprenant pour le dispositif de qualimétrie :
d) à réception desdites données qualimétriques horodatées par ledit dispositif de qualimétrie, authentifier lesdites données qualimétriques horodatées à partir de ladite signature reçue et d'une clé publique de signature associée audit compteur, et stocker (S106) en mémoire lesdites données qualimétriques horodatées en association avec un identifiant dudit compteur ayant envoyé lesdites données qualimétriques horodatées en cas d'authentification réussie.

2. Le procédé selon la revendication 1, dans lequel ledit compteur est un compteur électrique et lesdites données qualimétriques comprennent une pluralité d'harmoniques de tension, une pluralité d'harmoniques de courant et un papillotement courte durée.

3. Le procédé selon la revendication 2, dans lequel, lesdites étapes a) à d) étant répétées M fois, M étant un entier positif, ledit procédé comprend calculer un papillotement longue durée à partir desdits M papillotements courte durée reçus et stocker ledit papillotement longue durée avec lesdites données qualimétriques horodatées reçues.

4. Le procédé selon la revendication 1, dans lequel ledit compteur est un compteur d'eau et lesdites données qualimétriques comprennent une pression aval moyennée, une différence moyennée entre une pression amont et une pression aval, un débit d'eau moyenné et une température d'eau moyennée.

5. Le procédé selon la revendication 4, dans lequel ladite requête comprend en outre une heure UTC et une heure de prochain réveil dudit compteur.

6. Le procédé selon l'une des revendications 1 à 5, dans lequel ledit dispositif de qualimétrie communique avec chacun desdits N compteurs par trames WM-Bus.

7. Un système (100) comprenant N compteurs (C1,C2), N étant un entier positif, et un dispositif de qualimétrie (Q) configuré pour communiquer avec lesdits N compteurs, chacun desdits N compteurs comprenant de la circuiterie électronique configurée pour :
- calculer (S100), par ledit compteur, des données qualimétriques sur une période temporelle T et horodater lesdites données qualimétriques ;
- recevoir (S102), par ledit compteur, une requête de données qualimétriques en provenance du dispositif de qualimétrie;
- en réponse à ladite requête, envoyer (S104), par ledit compteur, lesdites données qualimétriques horodatées audit dispositif de qualimétrie en y ajoutant une signature,
et ledit dispositif de qualimétrie comprenant de la circuiterie électronique configurée pour :
- envoyer (S102) une requête de données qualimétrique audit compteur ;
- à réception desdites données qualimétriques horodatées par ledit dispositif de qualimétrie, authentifier lesdites données qualimétriques horodatées à partir de ladite signature reçue et d'une clé publique de signature associée audit compteur, et stocker (S106) en mémoire lesdites données qualimétriques horodatées en association avec un identifiant dudit compteur ayant envoyé lesdites données qualimétriques horodatées en cas d'authentification réussie.

8. Le système selon la revendication 7, ledit système étant configuré en outre pour mettre en œuvre le procédé selon l'une des revendications 2 à 6.

9. Un procédé de relève de données qualimétriques par un dispositif de qualimétrie (Q) configuré pour communiquer avec N compteurs (C1, C2), N étant un entier positif, ledit procédé comprenant les étapes suivantes mises en œuvre par ledit dispositif de qualimétrie :
a) envoyer (S102) une requête de données qualimétriques à au moins un compteur parmi lesdits N compteurs ;
b) recevoir (S104) dudit compteur des données qualimétriques horodatées ; et
c) authentifier lesdites données qualimétriques horodatées à partir d'une signature reçue et d'une clé publique de signature associée audit compteur, et stocker (S106) en mémoire lesdites données qualimétriques horodatées en association avec un identifiant dudit compteur ayant envoyé lesdites données qualimétriques horodatées en cas d'authentification réussie.

10. Un procédé de relève de données qualimétriques par un dispositif de qualimétrie (Q) configuré pour communiquer avec N compteurs (C1, C2), N étant un entier positif, ledit procédé comprenant les étapes suivantes mises en œuvre par chacun desdits N compteurs :
a) calculer (S100), par ledit compteur, des données qualimétriques sur une période temporelle T et horodater lesdites données qualimétriques ;
b) recevoir (S102) une requête de données qualimétriques en provenance dudit dispositif de qualimétrie ; et
c) envoyer (S104) lesdites données qualimétriques horodatées audit dispositif de qualimétrie en y ajoutant une signature.

11. Un dispositif de qualimétrie (Q) configuré pour communiquer avec N compteurs (C1, C2), N étant un entier positif, ledit dispositif de qualimétrie comprenant de la circuiterie électronique configurée pour :
a) envoyer (S102) une requête de données qualimétriques à au moins un compteur parmi lesdits N compteurs ;
b) recevoir (S104) dudit compteur des données qualimétriques horodatées ; et
c) authentifier lesdites données qualimétriques horodatées à partir d'une signature reçue et d'une clé publique de signature associée audit compteur, et stocker (S106) en mémoire lesdites données qualimétriques horodatées en association avec un identifiant dudit compteur ayant envoyé lesdites données qualimétriques horodatées en cas d'authentification réussie.

12. Un compteur (C1, C2) configuré pour communiquer avec un dispositif de qualimétrie (Q), ledit compteur comprenant de la circuiterie électronique configurée pour :
a) calculer (S100) des données qualimétriques sur une période temporelle T et horodater lesdites données qualimétriques ;
b) recevoir (S102) une requête de données qualimétrique en provenance dudit dispositif de qualimétrie ; et
c) envoyer (S104) lesdites données qualimétriques horodatées audit dispositif de qualimétrie en y ajoutant une signature.

13. Un produit programme d'ordinateur comprenant des instructions pour mettre en œuvre les étapes, exécutées par le dispositif de qualimétrie (Q), du procédé de relève de données qualimétriques selon l'une quelconque des revendications 1 à 6, et 9, lorsque ledit programme est exécuté par au moins un processeur dudit dispositif de qualimétrie,

14. Un produit programme d'ordinateur comprenant des instructions pour mettre en en œuvre les étapes, exécutées par le compteur (C1, C2), du procédé de relève de données qualimétriques, selon l'une quelconque des revendications 1 à 6, et 10, lorsque ledit programme est exécuté par au moins un processeur dudit compteur,

15. Un support de stockage stockant un programme d'ordinateur selon l'une des revendications 13 et 14.

## Patentansprüche

1. Verfahren zur Erhebung von qualimetrischen Daten durch eine Qualimetrievorrichtung (Q), die dazu ausgestaltet ist, mit N Zählern zu kommunizieren, wobei N eine positive ganze Zahl ist, wobei das Verfahren für jeden der N Zähler (C1, C2) umfasst:
a) Berechnen (S100), durch den Zähler, von qualimetrischen Daten über einen Zeitraum T und Zeitstempeln der qualimetrischen Daten;
b) Empfangen (S102), durch den Zähler, einer Anforderung qualimetrischer Daten von der Qualimetrievorrichtung;
c) als Antwort auf die Anforderung, Senden (S104), durch den Zähler, der zeitgestempelten qualimetrischen Daten an die Qualimetrievorrichtung unter Hinzufügung einer Signatur;
und wobei das Verfahren für die Qualimetrievorrichtung umfasst:
d) beim Empfangen der zeitgestempelten qualimetrischen Daten durch die Qualimetrievorrichtung, Authentifizieren der zeitgestempelten qualimetrischen Daten ausgehend von der empfangenen Signatur und von einem dem Zähler zugeordneten öffentlichen Signaturschlüssel und Speichern (S106) der zeitgestempelten qualimetrischen Daten im Speicher unter Zuordnung zu einer Kennung des Zählers, der die zeitgestempelten qualimetrischen Daten gesendet hat, im Fall einer erfolgreichen Authentifizierung.

2. Verfahren nach Anspruch 1, wobei der Zähler ein Stromzähler ist und die qualimetrischen Daten eine Mehrzahl von Spannungsharmonischen, eine Mehrzahl von Stromharmonischen und einen Kurzzeitflicker umfassen.

3. Verfahren nach Anspruch 2, wobei, wenn die Schritt a) bis d) M Mal wiederholt werden, wobei M eine positive ganze Zahl ist, das Verfahren das Berechnen eines Langzeitflickers ausgehend von den M empfangenen Kurzzeitflickern und das Speichern des Langzeitflickers mit den empfangenen zeitgestempelten qualimetrischen Daten umfasst.

4. Verfahren nach Anspruch 1, wobei der Zähler ein Wasserzähler ist und die qualimetrischen Daten einen gemittelten stromabwärtigen Druck, eine gemittelte Differenz zwischen einem stromaufwärtigen Druck und einem stromabwärtigen Druck und einen gemittelten Wasservolumenstrom und eine gemittelte Wassertemperatur umfassen.

5. Verfahren nach Anspruch 4, wobei die Anforderung ferner eine UTC-Zeit und eine Zeit des nächsten Weckens des Zählers umfasst.

6. Verfahren nach einem der Ansprüche 1 bis 5, wobei die Qualimetrievorrichtung mit jedem der N Zähler über WM-Bus-Frames kommuniziert.

7. System (100), umfassend N Zähler (C1,C2), wobei N eine positive ganze Zahl ist, und eine Qualimetrievorrichtung (Q), die dazu ausgestaltet ist, mit dem N Zählern zu kommunizieren, wobei jeder der N Zähler eine elektronische Schaltungsanordnung umfasst, die ausgestaltet ist zum:
- Berechnen (S100), durch den Zähler, von qualimetrischen Daten über einen Zeitraum T und Zeitstempeln der qualimetrischen Daten;
- Empfangen (S102), durch den Zähler, einer Anforderung qualimetrischer Daten von der Qualimetrievorrichtung;
- als Antwort auf die Anforderung, Senden (S104), durch den Zähler, der zeitgestempelten qualimetrischen Daten an die Qualimetrievorrichtung unter Hinzufügung einer Signatur;
und wobei die Qualimetrievorrichtung eine elektronische Schaltungsanordnung umfasst, die ausgestaltet ist zum:
- Senden (S102) einer Anforderung qualimetrischer Daten an den Zähler;
- beim Empfangen der zeitgestempelten qualimetrischen Daten durch die Qualimetrievorrichtung, Authentifizieren der zeitgestempelten qualimetrischen Daten ausgehend von der empfangenen Signatur und von einem dem Zähler zugeordneten öffentlichen Signaturschlüssel und Speichern (S106) der zeitgestempelten qualimetrischen Daten im Speicher unter Zuordnung zu einer Kennung des Zählers, der die zeitgestempelten qualimetrischen Daten gesendet hat, im Fall einer erfolgreichen Authentifizierung.

8. System nach Anspruch 7, wobei das System ferner dazu ausgestaltet ist, das Verfahren nach einem der Ansprüche 2 bis 6 zu implementieren.

9. Verfahren zur Erhebung von qualimetrischen Daten durch eine Qualimetrievorrichtung (Q), die dazu ausgestaltet ist, mit N Zählern (C1, C2) zu kommunizieren, wobei N eine positive ganze Zahl ist, wobei das Verfahren die folgenden von der Qualimetrievorrichtung implementierten Schritte umfasst:
a) Senden (S102) einer Anforderung qualimetrischer Daten an mindestens einen Zähler unter den N Zählern;
b) Empfangen (S104) von zeitgestempelten qualimetrischen Daten von dem Zähler; und
c) Authentifizieren der zeitgestempelten qualimetrischen Daten ausgehend von einer empfangenen Signatur und von einem dem Zähler zugeordneten öffentlichen Signaturschlüssel und Speichern (S106) der zeitgestempelten qualimetrischen Daten im Speicher unter Zuordnung zu einer Kennung des Zählers, der die zeitgestempelten qualimetrischen Daten gesendet hat, im Fall einer erfolgreichen Authentifizierung.

10. Verfahren zur Erhebung von qualimetrischen Daten durch eine Qualimetrievorrichtung (Q), die dazu ausgestaltet ist, mit N Zählern (C1, C2) zu kommunizieren, wobei N eine positive ganze Zahl ist, wobei das Verfahren die folgenden von jedem der N Zähler implementierten Schritte umfasst:
a) Berechnen (S100), durch den Zähler, von qualimetrischen Daten über einen Zeitraum T und Zeitstempeln der qualimetrischen Daten;
b) Empfangen (S102) einer Anforderung qualimetrischer Daten von der Qualimetrievorrichtung; und
c) Senden (S104) der zeitgestempelten qualimetrischen Daten an die Qualimetrievorrichtung unter Hinzufügung einer Signatur.

11. Qualimetrievorrichtung (Q), die dazu ausgestaltet ist, mit N Zählern (C1, C2) zu kommunizieren, wobei N eine positive ganze Zahl ist, wobei die Qualimetrievorrichtung eine elektronische Schaltungsanordnung umfasst, die ausgestaltet ist zum:
a) Senden (S102) einer Anforderung qualimetrischer Daten an mindestens einen Zähler unter den N Zählern;
b) Empfangen (S104) von zeitgestempelten qualimetrischen Daten von dem Zähler; und
c) Authentifizieren der zeitgestempelten qualimetrischen Daten ausgehend von einer empfangenen Signatur und von einem dem Zähler zugeordneten öffentlichen Signaturschlüssel und Speichern (S106) der zeitgestempelten qualimetrischen Daten im Speicher unter Zuordnung zu einer Kennung des Zählers, der die zeitgestempelten qualimetrischen Daten gesendet hat, im Fall einer erfolgreichen Authentifizierung.

12. Zähler (C1, C2), der dazu ausgestaltet ist, mit einer Qualimetrievorrichtung (Q) zu kommunizieren, wobei der Zähler eine elektronische Schaltungsanordnung umfasst, die ausgestaltet ist zum:
a) Berechnen (S100) von qualimetrischen Daten über einen Zeitraum T und Zeitstempeln der qualimetrischen Daten;
b) Empfangen (S102) einer Anforderung qualimetrischer Daten von der Qualimetrievorrichtung; und
c) Senden (S104) der zeitgestempelten qualimetrischen Daten an die Qualimetrievorrichtung unter Hinzufügung einer Signatur.

13. Computerprogrammprodukt, das Anweisungen umfasst, um die von der Qualimetrievorrichtung (Q) ausgeführten Schritte des Verfahrens zur Erhebung von qualimetrischen Daten nach einem der Ansprüche 1 bis 6 und 9 zu implementieren, wenn das Programm von mindestens einem Prozessor der Qualimetrievorrichtung ausgeführt wird,

14. Computerprogrammprodukt, das Anweisungen umfasst, um die von dem Zähler (C1, C2) ausgeführten Schritte des Verfahrens zur Erhebung von qualimetrischen Daten nach einem der Ansprüche 1 bis 6 und 10 zu implementieren, wenn das Programm von mindestens einem Prozessor des Zählers ausgeführt wird.

15. Speichermedium, das ein Computerprogramm nach einem der Ansprüche 13 und 14 speichert.

## Claims

1. A method for reading qualimetric data by a qualimetry device (Q) configured for communicating with N meters, N being a positive integer, said method comprising, for each of said N meters (C1, C2):
a) calculating (S100), by said meter, qualimetric data over a time period T and timestamping said qualimetric data;
b) receiving (S102), by said meter, a request for qualimetric data from said qualimetry device;
c) in response to said request, sending (S104), by said meter, said timestamped qualimetric data to said qualimetry device while adding a signature thereto;
and said method comprising for the qualimetry device:
d) on reception of said timestamped qualimetric data by said qualimetry device, authenticating said timestamped qualimetric data from said signature received and from a signature public key associated with said meter, and storing (S106) said timestamped qualimetric data in memory in association with an identifier of said meter that sent said timestamped qualimetric data in the case of successful authentication.

2. The method according to claim 1, wherein said meter is an electricity meter and said qualimetric data comprise a plurality of voltage harmonics, a plurality of current harmonics and a short-duration flicker.

3. The method according to claim 2, wherein, said steps a) to d) being repeated M times, M being a positive integer, said method comprises calculating a long-duration flicker from said M short-duration flickers received and storing said long-duration flicker with said timestamped qualimetric data received.

4. The method according to claim 1, wherein said meter is a water meter and said qualimetric data comprise an averaged downstream pressure, an averaged difference between an upstream pressure and a downstream pressure, an averaged water flow rate and an averaged water temperature.

5. The method according to claim 4, wherein said request further comprises a UTC time and a time of next awakening of said meter.

6. The method according to one of claims 1 to 5, wherein said qualimetry device communicates with each of said N meters by WM-Bus frames.

7. A system (100) comprising N meters (C1, C2), N being a positive integer, and a qualimetry device (Q) configured for communicating with said N meters, each of said N meters comprising electronic circuitry configured for:
- calculating (S100) qualimetric data, by said meter, over a time period T and timestamping said qualimetric data;
- receiving (S102), by said meter, a request for qualimetric data from the qualimetry device;
- in response to said request, sending (S104), by said meter, said timestamped qualimetric data to said qualimetry device while adding a signature thereto, and said qualimetry device comprising electronic circuitry configured for:
- sending (S102) a request for qualimetric data to said meter;
- on reception of said timestamped qualimetric data by said qualimetry device, authenticating said timestamped qualimetric data from said signature received and from a signature public key associated with said meter, and storing (S106) said timestamped qualimetric data in memory in association with an identifier of said meter that sent said timestamped qualimetric data in the case of successful authentication.

8. The system according to claim 7, said system furthermore being configured for implementing the method according to one of claims 2 to 6.

9. A method for reading qualimetric data by a qualimetry device (Q) configured for communicating with N meters (C1, C2), N being a positive integer, said method comprising the following steps performed by said qualimetry device:
a) sending (S102) a request for qualimetric data to at least one meter from said N meters;
b) receiving (S104) timestamped qualimetric data from said meter; and
c) authenticating said timestamped qualimetric data from a signature received and from a signature public key associated with said meter, and storing (S106) said timestamped qualimetric data in memory in association with an identifier of said meter that sent said timestamped qualimetric data in the case of successful authentication.

10. A method for reading qualimetric data by a qualimetry device (Q) configured for communicating with N meters (C1, C2), N being a positive integer, said method comprising the following steps performed by each of said N meters:
a) calculating (S100), by said meter, qualimetric data over a time period T and timestamping said qualimetric data;
b) receiving (S102) a request for qualimetric data from said qualimetry device; and
c) sending (S104) said timestamped qualimetric data to said qualimetry device while adding a signature thereto.

11. A qualimetry device (Q) configured for communicating with N meters (C1, C2), N being a positive integer, said qualimetry device comprising electronic circuitry configured for:
a) sending (S102) a request for qualimetric data to at least one meter from said N meters;
b) receiving (S104) timestamped qualimetric data from said meter; and
c) authenticating said timestamped qualimetric data from a signature received and from a signature public key associated with said meter, and storing (S106) said timestamped qualimetric data in memory in association with an identifier of said meter that sent said timestamped qualimetric data in the case of successful authentication.

12. A meter (C1, C2) configured for communicating with a qualimetry device (Q), said meter comprising electronic circuitry configured for:
a) calculating (S100) qualimetric data over a time period T and timestamping said qualimetric data;
b) receiving (S102) a request for qualimetric data from said qualimetry device; and
c) sending (S104) said timestamped qualimetric data to said qualimetry device while adding a signature thereto.

13. A computer program product comprising instructions for performing the steps, performed by the qualimetry device (Q), of the method for reading qualimetric data according to any one of claims 1 to 6, and 9, when said program is executed by at least one processor of said qualimetry device.

14. A computer program product comprising instructions for performing the steps, performed by the meter (C1, C2), of the method for reading qualimetric data, according to any one of claims 1 to 6, and 10, when said program is executed by at least one processor of said meter.

15. A storage medium storing a computer program according to one of claims 13 and 14.
